# EUROPÄISCHE PATENTANMELDUNG

(11) **EP 0 982 094 A2**
(43) Veröffentlichungstag der Anmeldung: **01.03.2000**
(21) Anmeldenummer: 99115068.1
(22) Anmeldetag: 05.08.1999
(51) Int. Cl.: B23D 61/18

(54) **Sägedraht**

(30) Priorität: 27.08.1998 DE 19839091
(71) Anmelder: Elektroschmelzwerk Kempten GmbH, 81737 München (DE)
(72) Erfinder: Lukschandel, Jörg, 87439 Kempten (DE); Meyer, Jürgen, 87439 Kempten (DE)
(74) Vertreter: Potten, Holger

(57) **Zusammenfassung**

Im Querschnitt runder Sägedraht mit einer Schnittbreite kleiner als 0,3 mm bestehend aus einem Stahldraht, einer Zwischenschicht, die sowohl eine Wasserstoffversprödung des Drahtes verhindert, als auch eine ausreichende Haftfestigkeit der metallischen Bindephase sicherstellt und einer metallischen Bindephase, in die Diamantkörner eingelagert sind.

## Beschreibung

Die Erfindung betrifft einen Sägedraht. Die Herstellung dünner Scheiben aus Blöcken oder Einkristallen sprödharter Materialien erfolgt in großem Umfang durch Trennvorgänge unter Verwendung gebundener Schleifmittel oder eines Sägedrahts mit losem Schleifkorn. Wenn es sich um teures Ausgangsmaterial, wie z.B. Blöcke aus einkristallinem oder polykristallinem Silizium, handelt, ist ein möglichst geringer Schnittverlust von großer wirtschaftlicher Bedeutung. Daher sind z. B. Schnittbreiten kleiner 0,3 mm bei der Herstellung von Siliziumscheiben aus Siliziumblöcken heute Stand der Technik. Das Abtrennen der Siliziumscheiben erfolgt dabei entweder mit diamantbesetzten Innenlochsägen oder mit Vielfach-Drahtsägen unter Verwendung einer Schleifmittelsuspension, vorzugsweise einer Siliziumkarbid-haltigen Suspension.

Die Schnittbreite beim Sägen ist naturgemäß größer als die Dicke des Sägeblatts bzw. der Durchmesser des Sägedrahtes. Je gröber das verwendete Schneidkorn ist, umso breiter wird auch der Schnitt, entsprechend steigt der unerwünschte Materialverlust an. Man ist daher bestrebt, das feinste Schleifkorn zu wählen, das noch eine akzeptable Schneidleistung erbringt. Beim Innenlochsägen mit gebundenem Diamantkorn hat sich das Korn D 46 (FEPA Standard, bzw. 325/400 mesh nach US ASTME 11) mit ca. 50 µm mittlerem Durchmesser als praktische Untergrenze durchgesetzt.

Die Drahtsäge hat den Vorteil, auch bei Blöcken von über 200 mm Durchmesser noch die geforderten geringen Schnittbreiten realisieren zu können. Bei dieser Trenntechnik wird als Sägedraht ein hochfester Stahldraht bei vielfacher Umlenkung über genutete Rollen unter Zugabe einer Suspension von Hartstoffkörnern, meist Siliziumkarbid mit einer Korngröße von 20 bis 25 µm unter mäßigem Druck über den zu schneidenden Block geführt. Der Draht arbeitet sich kontinuierlich durch den gesamten Querschnitt des Blocks. Nachteiligerweise nutzt sich der Draht selbst stark ab und kann daher nur einmal verwendet werden.

Da sich ein metallisch gebundener Diamantschleifbelag, wie er beispielsweise bei den Innenlochsägen verwendet wird, wesentlich weniger abnutzt als der Draht beim Sägen mit Hartstoffsuspension ("slurry"), wurde bereits versucht, Draht mit Diamantkorn zu belegen.

Für einen ausreichend festen Halt der Diamantkörner auf dem Sägedraht sollte die Bindephase aus Metall bestehen. In der Praxis hat sich bei der beschichtungstechnischen Herstellung von metallgebundenen Diamant-Schleifbelägen vor allen Nickel als geeignetes Bindemetall erwiesen. Nickel läßt sich z. B. in reiner Form elektrolytisch oder außenstromlos als Nickellegierung mit Phosphor- oder Boranteilen abscheiden. Für die außenstromlos abgeschiedenen Nickellegierungen hat sich der Begriff "Chemisch Nickel" durchgesetzt.

Nachteiligerweise entsteht bei der Metallisierung selbst und auch bei der üblichen Vorbehandlung des Trägermaterials Wasserstoff, der bei unlegierten, hochfesten Stahldrähten zu Spontanbrüchen infolge der sog. Wasserstoffversprödung führen kann. Unlegierte, hochfeste Stahldrähte werden üblicherweise zum Suspensions-Drahtsägen verwendet. Höher legierte Stähle, die gegen Wasserstoffversprödung unempfindlich sind, haben den Nachteil, daß auf ihnen galvanotechnisch aufgebrachte Nickelschichten häufig nicht ausreichend fest haften. Bei den in einer Drahtsäge notwendigen mehrfachen Umlenkungen platzen diese Schichten samt den eingebauten Diamantkörnern ab.

Der Sonderdruck "Diamant-Drahtsägen für Präzisionsschnitte" von W. Ebner, Fa. Well aus "Eurotec" Nr. 218 vom Febr./März 1985 zeigt in Fig. 3 die REM Aufnahme eines galvanisch belegten Diamant Sägedrahtes, in Fig. 4 die REM Aufnahme eines chemisch beschichteten Diamant Sägedrahtes und in Fig. 5 die REM Aufnahmen eines Diamant Sägedrahtes mit mechanisch eingewalztem Belag. Während zu Fig. 5 ein Maßstab wiedergegeben ist, finden sich zu Fig. 3 und Fig. 4 keine Maßstabsangaben. Auch weitere Angaben zur Teilchengröße oder Zusammensetzung der gezeigten Oberflächen fehlen. Die Herstellung der abgebildeten Drähte wird nicht offenbart. Unter Punkt 2. des Sonderdrucks wird ausgeführt, daß der Diamant mit drei Verfahren auf den Draht aufgebracht werden kann, nämlich mittels galvanischem Auftrag, mittels chemischer Beschichtung und mittels mechanischem Einwalzen. Einzelheiten zu den Herstellungsverfahren finden sich in der Schrift nicht. Es heißt lediglich, daß Drähte unter 0,1 mm Durchmesser wegen der im galvanischen Bad auftretenden Wasserstoffversprödung des Drahtes nicht galvanisch beschichtbar sind, und daß das chemische Beschichten nur in Einzelfällen durchgeführt wird. Das Problem der Wasserstoffversprödung tritt jedoch ebenso bei größeren Durchmessern des Drahtes auf.

Käuflich erhältlich ist ausschließlich Draht mit mechanisch eingewalztem Diamantkorn und dieser auch nur in labormäßig einsetzbaren Längen. Derartiger Draht verliert sehr schnell seine Schneidfreudigkeit weil die Diamantkörner leicht herausbrechen. Außerdem wird die Zugfestigkeit des Trägerdahtes durch die Eindrücke der scharfkantigen Diamantpartikel stark herabgesetzt, so daß nur geringe Schnittkräfte zu erzielen sind.

Sägedraht mit Schnittbreiten < 0,3 mm ist somit nicht in der Ausführung mit metallisch gebundenem Diamantkorn verfügbar.

Die vorliegende Erfindung hat daher die Aufgabe, einen im Querschnitt runden Sägedraht, mit einer Schnittbreite kleiner als 0,3 mm zur Verfügung zu stellen, der eine dem Suspensionssägen vergleichbare Schneidfreudigkeit hat und vielfach wiederverwendbar ist.

Die Erfindung betrifft einen Sägedraht bestehend aus einem Stahldraht, einer Zwischenschicht, die sowohl eine Wasserstoffversprödung des Drahtes verhindert, als auch eine ausreichende Haftfestigkeit der metallischen Bindephase sicherstellt und einer metallischen Bindephase, in die Diamantkörner eingelagert sind.

Der erfindungsgemäße Sägedraht hat einschließlich Schleifkornbelag vorzugsweise einen Durchmesser von bis zu max. 0,25 mm.

Als Stahldraht wird vorzugsweise nichtrostender Federstahldraht aus Chrom-Nickel-Stahl verwendet. Geeignet sind z.B. die Werkstofftypen 1.4310, 1.4401, 1.4539, 1.4568 und 1.4571 (Bezeichnung nach DIN 17224).

Der Stahldraht hat vorzugsweise einen Durchmesser von 0,15 bis 0,25 mm.

Die Zwischenschicht besteht vorzugsweise aus einem Metall, einer Metallegierung oder einer Kombination zweier Metalle bzw. eines Metalls und einer Metallegierung.

Vorzugsweise handelt es sich um ein Metall, eine Metallegierung oder eine Kombination zweier Metalle bzw. eines Metalls und einer Metallegierung, die mit guter Haftfestigkeit galvanotechnisch beschichtbar ist und gleichzeitig als Wasserstoffbarriere wirkt.

Geeignete Metalle sind z.B. Kupfer und Nickel und als Metallegierung z.B. Messing.

Besonders bevorzugt ist dazu Nickel geeignet.

Die Zwischenschicht hat vorzugsweise eine Stärke von 1 bis 10 µm.

Die metallische Bindephase besteht vorzugsweise aus Nickel bzw. Nickellegierungen.

Besonders bevorzugt besteht sie aus außenstromlos abgeschiedenem Nickel (chemisch Nickel).

Die metallische Bindephase hat vorzugsweise eine Stärke von 5 bis 20 µm.

Die Diamantkörner haben vorzugsweise eine Größe von 5 bis 30 µm. Sie befinden sich vorzugsweise in einer derartigen Menge auf dem Draht, daß ihr mittlerer Abstand nicht mehr als das 5-fache, vorzugsweise das 1- bis 3-fache ihres mittleren Durchmessers beträgt.

Vorzugsweise variiert die Dicke der Zwischenschicht um den Draht um nicht mehr als 5 %.

Vorzugsweise variiert die Dicke der metallischen Bindephase um den Draht um nicht mehr als 5 %.

Der erfindungsgemäße Sägedraht kann beispielsweise wie folgt hergestellt werden:

Ein Stahldraht mit einer Zwischenschicht, die sowohl eine Wasserstoffversprödung des Drahtes verhindert, als auch eine ausreichende Haftfestigkeit der metallischen Bindephase sicherstellt, ist im Stand der Technik an sich bekannt. Solche Drähte bestehend aus mit Nickel beschichtetem Draht aus Werkstoff 1.4310 (nach DIN 17224) sind beispielsweise unter der Bezeichnung 12 R 10 Nicoat bei der Firma Sandvik, Düsseldorf käuflich erhältlich.

Prinzipiell ist es jedoch auch möglich, nach im Stand der Technik bekannten Verfahren einen Stahldraht mit einer geeigneten Zwischenschicht zu beschichten.

Zur Herstellung des Ausgangsmaterials für den erfindungsgemäßen Sägedraht werden dazu vorzugsweise Drähte eingesetzt, deren Durchmesser noch um das Dreifache größer ist als der Durchmesser des erfindungsgemäßen Drahtes. Diese Drähte können wirtschaftlich nach bekannten Verfahren vernickelt werden. Durch Ziehen dieses beschichteten Vormaterials lassen sich beispielsweise Federdrähte mit einer ca.2 µm dicken, gut haftenden Nickelschicht und hoher Zugfestigkeit auch aus hochlegierten Federstählen herstellen.

Als Verfahren, um die metallische Bindephase mit den Diamantkörnern auf den mit einer Zwischenschicht versehenen Draht aufzubringen, sind prinzipiell sowohl elektrolytische Abscheidung als auch außenstromlose Abscheidung geeignet.

Obwohl die elektrolytische Abscheidung schneller und billiger ist, wird bevorzugt eine außenstromlose Abscheidung eingesetzt, da diese eine gleichmäßigere Schichtdicke der Bindephase ermöglicht.

Dazu geht man beispielsweise wie folgt vor:

Ein mit einer Zwischenschicht versehener Draht erfährt eine auf das Grundmaterial abgestimmte chemische Vorbehandlung. Die Vorbehandlung ist Voraussetzung für den Erhalt einer haftfesten Beschichtung. Sie ist im Stand der Technik bekannt und besteht üblicherweise aus bekannten Entfettungs-, Beiz- und Aktivierungsbehandlungen. Anschließend erfolgt die Beschichtung in einem sogenannten Chemisch-Nickel-Diamantbad (Bad zur außenstromlosen Nickel-Diamant-Abscheidung). Solche Bäder sind im Stand der Technik bekannt. Durch eine geeignete Bewegung von Draht und Elektrolyt wird eine gleichmäßige Diamanteinlagerung auf dem gesamten Umfang des Drahtes erreicht. Die Dicke der abgeschiedenen Bindephase ist von der Größe der Diamantpartikel abhängig. Diese entsprechenden Verfahrensparameter sind im Stand der Technik bekannt.

Vorzugsweise wird im Anschluß an die Beschichtung die Bindephase aus chemisch Nickel thermisch ausgehärtet. Dies geschieht vorzugsweise durch eine mindestens einstündige Wärmebehandlung.

Die optimale Aushärtung erfordert vorzugsweise eine Temperatur von 250 bis 450°C, besonders bevorzugt von etwa 350°C.

Durch die thermische Aushärtung werden die Eigenschaften der Bindephase erheblich verbessert, die Zugeigenspannung wird abgebaut, die Haftfestigkeit wird erhöht und die Härte wird um mehr als 50 % gesteigert.

Dadurch wird nicht nur ein festerer Sitz der eingebauten Diamantpartikel erzielt, es steigt auch der Verschleißwiderstand der Bindephase an, so daß ein Ausfallen der Diamanten wegen Abnutzung der Matrix verzögert wird.

Diese Temperaturen führen bei hochfestem unlegiertem Draht zu einem drastischen Abfall von Zugfestigkeit und Elastizität, was für die Anwendung in einer Drahtsäge unzulässig ist. Unlegierter Stahldraht ist außerdem korrosionsanfällig.

In der Regel wird man daher bei Abwägung aller Einflußgrößen auf das Betriebsverhalten eines Sägedrahts einem hochlegierten Trägermaterial als Ausgangsmaterial für die Herstellung des erfindungsgemäßen Sägedrahtes den Vorrang geben. Vorzugsweise werden auf diesen, mit einer beschriebenen Zwischenschicht versehen Draht, die Diamanten in einer außenstromlos abgeschiedenen metallischen Bindephase aufgebracht.

Für manche Anwendungen sind jedoch durchaus auch unlegierter mit einer beschriebenen Zwischenschicht versehener Draht mit elektrolytisch abgeschiedener, nicht aushärtbarer diamanthaltiger Bindephase geeignet.

Bei dem erfindungsgemäßen Sägedraht zeigt sich überraschenderweise, daß auch mit wesentlich feineren Körnungen als der im Stand der Technik (beim Innenlochsägen) überwiegend verwendeten Körnung D 46 noch befriedigende Schnittleistungen zu erzielen sind.

Der erfindungsgemäße Sägedraht eignet sich insbesondere für das Sägen teurer sprödharter Materialien, bei denen ein möglichst geringer Schnittverlust von großer wirtschaftlicher Bedeutung ist.

Das folgende Beispiel dient der weiteren Erläuterung der Erfindung.

### Beispiel

Es wurden 60 m eines hochlegierten Stahldrahtes, käuflich erhältlich unter der Bezeichnung 12 R 10 Nicoat bei der Firma Sandvik mit einem Durchmesser von 0,20 mm auf einen für die stromlose Nickelabscheidung üblichen Warenträger aufgenommen.

Der Draht wurde der bei einer stromlosen Nickelabscheidung üblichen Entfettungs-, Beiz- und Aktivierungsbehandlung unterzogen. Anschließend erfolgte die Beschichtung in einem käuflich erhältlichen Chemisch-Nickel-Diamantbad (erhältlich unter der Bezeichnung Niposit 65 bei der Firma Shipley in Esslingen). Dem Bad werden Diamantpartikel der Korngröße 15 bis 25 µm (genormtes Standardprodukt erhältlich bei verschiedenen Lieferanten) zugesetzt. Durch eine Bewegung von Draht und Elektrolyt wurde eine gleichmäßige Diamanteinlagerung auf dem gesamten Umfang des Drahtes in die aus Chemisch-Nickel bestehende Bindephase erreicht. Nach dem Beschichten wurde der Draht zum Zweck der Aushärtung bei 350° C für eine Stunde wärmebehandelt.

Anschließend wurde der so erhaltene erfindungsgemäße Sägedraht auf die Drahttrommeln einer Drahtsäge der Fa. Well (Baureihe 3), die mit einem Meßsystem zur Erfassung der Schnittleistung ausgerüstet war, aufgebracht. Mit der Drahtsäge wurden prismatische Körper aus Reinstsilizium mit einem Querschnitt von 10 x 10 mm zehnmal nacheinander durchgesägt. Die jeweils für das Durchsägen benötigte Zeit wurde gemessen und die zugehörige Schnittleistung wurde errechnet.

Als Vergleichsversuche wurden gleiche Sägeversuche mit einem handelsüblichen Draht mit mechanisch eingewalztem Diamantkorn (Firma Well, Typ A 3-2, Korngröße 60 µm) durchgeführt.

Die Ergebnisse sind in Tabelle 1 wiedergegeben.

**Tab.1**

| Schnittleistung in Abhängigkeit von der Einsatzdauer | | |
|---|---|---|
| | **Schnittleistung in mm/min.** | |
| | **Sägedraht Vergleichsversuch** | **erfindungsgemäßer Sägedraht** |
| **Versuch 1** | **0,65** | **1,60** |
| **Versuch 2** | **0,60** | **1,40** |
| **Versuch 3** | **0,50** | **1,38** |
| **Versuch 4** | **0,47** | **1,38** |
| **Versuch 5** | **0,45** | **1,20** |
| **Versuch 6** | **0,45** | **1,10** |
| **Versuch 7** | **0,42** | **0,90** |
| **Versuch 8** | **0,40** | **0,80** |
| **Versuch 9** | **0,38** | **0,80** |
| **Versuch 10** | **0,35** | **0,70** |

Die Ergebnisse in Tabelle 1 zeigen, daß die Schnittleistung des erfindungsgemäßen Drahtes um den Faktor 2 bis 3 höher ist als die des handelsüblichen Drahtes.
Ferner ist ersichtlich, daß selbst nach 10-maligem Einsatz der erfindungsgemäße Draht eine bessere Schnittleistung zeigt, als der Referenzdraht im Neuzustand. Daraus ergibt sich, daß auch die Standfestigkeit eines erfindungsgemäßen Drahtes um ein mehrfaches höher ist als die Standfestigkeit eines bekannten Sägedrahtes.

Die hohen Schnittleistungen und die deutlich verbesserte Standfestigkeit des erfindungsgemäßen Drahtes resultieren aus der guten mechanischen Verankerung der Feststoffpartikel in der verschleißfesten Bindephase. Im Gegensatz zum Referenzdraht war auch nach mehreren Schnitten eine dichte Diamantbelegung des Drahtes vorhanden.

## Patentansprüche

1. Im Querschnitt runder Sägedraht mit einer Schnittbreite kleiner als 0,3 mm bestehend aus einem Stahldraht, einer Zwischenschicht, die sowohl eine Wasserstoffversprödung des Drahtes verhindert, als auch eine ausreichende Haftfestigkeit der metallischen Bindephase sicherstellt und einer metallischen Bindephase, in die Diamantkörner eingelagert sind.

2. Sägedraht nach Anspruch 1, dadurch gekennzeichnet, daß als Stahldraht ein nichtrostender Federstahldraht aus Chrom-Nickel-Stahl verwendet wird.

3. Sägedraht nach Anspruch 1 oder 2, dadurch gekennzeichnet, daß der Stahldraht einen Durchmesser von 0,15 bis 0,25 mm hat.

4. Sägedraht nach einem der Ansprüche 1 bis 3, dadurch gekennzeichnet, daß die Zwischenschicht, aus einem Metall, einer Metallegierung oder einer Kombination zweier Metalle bzw. eines Metalls und einer Metallegierung besteht, die mit guter Haftfestigkeit galvanotechnisch beschichtbar ist und gleichzeitig als Wasserstoffbarriere wirkt.

5. Sägedraht nach Anspruch 4, dadurch gekennzeichnet, daß die Zwischenschicht aus Nickel besteht.

6. Sägedraht nach Anspruch 4 oder 5, dadurch gekennzeichnet, daß die zwischenschicht eine Stärke von 1 bis 10 µm hat.

7. Sägedraht nach einem der Ansprüche 1 bis 6, dadurch gekennzeichnet, daß die metallische Bindephase aus Nickel bzw. Nickellegierungen besteht.

8. Sägedraht nach Anspruch 7, dadurch gekennzeichnet, daß die metallische Bindephase eine Stärke von 5 bis 20 µm hat.

9. Sägedraht nach Anspruch 1, dadurch gekennzeichnet, daß die Diamantkörner eine Größe von 5 bis 30 µm haben.

10. Sägedraht nach einem der Ansprüche 1 bis 9, dadurch gekennzeichnet, daß die Dicke der metallischen Bindephase um den Draht um nicht mehr als 5 % variiert.
